# EUROPÄISCHE PATENTSCHRIFT

(11) **EP 3 101 328 B1**
(45) Veröffentlichungstag und Bekanntmachung des Hinweises auf die Patenterteilung: **15.01.2020**
(21) Anmeldenummer: 16170588.4
(22) Anmeldetag: 20.05.2016
(51) Int. Cl.: F16P 1/02, B23Q 11/00, E05B 17/20, E05B 47/02, F16P 3/08

(54) **WERKZEUGMASCHINE**
MACHINE TOOL
MACHINE-OUTIL

(30) Priorität: 29.05.2015 DE 102015209923
(43) Veröffentlichungstag der Anmeldung: 07.12.2016
(73) Patentinhaber: HOMAG GmbH, 72296 Schopfloch (DE)
(72) Erfinder: Rathgeber, Peter, 72280 Dornstetten (DE)
(74) Vertreter: Hoffmann Eitle

(56) Entgegenhaltungen:
- EP-A2- 1 136 745
- EP-A2- 2 295 679
- DE-A1- 3 606 458
- DE-A1- 10 252 025
- DE-A1-102006 046 437
- DE-U1-202012 001 077
- GB-A- 906 862
- JP-A- 2011 143 483

## Beschreibung

### Technisches Gebiet

Die vorliegende Erfindung betrifft eine Werkzeugmaschine zur Bearbeitung von plattenförmigen Werkstücken, die bevorzugt zumindest abschnittsweise aus Holz, Holzwerkstoffen oder Kunststoffen bestehen, mit einem Verriegelungssystem für eine Schutzeinrichtung.

### Stand der Technik

Bei Werkzeugmaschinen, die während des Betriebes nicht betreten dürfen bzw. deren Bearbeitungsbereiche nicht zugänglich gemacht werden dürfen und die zur maschinellen Bearbeitung von Werkstücken, die beispielsweise aus Holz, Holzwerkstoffen, Kunststoffen oder dergleichen bestehen, dienen, verwendet man bisher für sicherheitsrelevanten Zugangsschutzvorrichtungen, beispielsweise Schutztüren, mechanische Verriegelungselemente oder optische Sensoren. Um eine hohe Maschinen- und Personensicherheit zu gewährleisten, können diese auch in Kombination miteinander zum Einsatz kommen.

Bestehende Systeme, wie zum Beispiel aus der DE 10 2012 106 719 A1 bekannt, besitzen einen Riegel, der in einen zu verschließenden Teil eingreift, mit zusätzlicher Überwachungsvorrichtung zum Erfassen der Position dieses Riegels.

Diese herkömmlichen Zugangsschutzvorrichtungen werden oft auf bestehende Strukturen aufgesetzt, um zum Beispiel auch einen erleichterten Zugang bei Fehlfunktion zu ermöglichen. Meist werden sie auch separat entwickelt und erst anschließend von den Werkzeugmaschinenherstellern in der Maschine integriert. Dadurch kommt es häufig zu hervorstehenden Teilen, die zum Beispiel beim Rüstvorgang, wenn man in der Werkzeugmaschine arbeiten muss, zu Stolperfallen werden. Daher stellen diese Systeme ein erhöhtes Sicherheitsrisiko im Betrieb dar. Herkömmliche Systeme sind zudem in ihren Funktionen meist getrennt, so dass die mechanische Ent- und Verriegelung an einer anderen Stelle erfolgt als die elektronische Überwachung der Position der Schutzeinrichtung. Daher wird bei Verwendung eines elektronischen Überwachungssystems oft auf ein mechanisches Verriegelungssystem verzichtet, wie es in der WO 2014/079959 A1 gezeigt wird.

Als weiteres Dokument ist die EP 2 295 679 A2 bekannt, die eine Zuhaltung für ein Bauteil zum Verschließen einer Öffnung zeigt, umfassend einen Bolzen, der zwischen einer verriegelnden oder einer entriegelten Endstellung in Bolzenlängsrichtung beweglich geführt ist, einem eine Bewegung ausführenden Antrieb zum Bewegen des Bolzens und einer Übertragungseinrichtung zwischen dem Antrieb und dem Bolzen, wobei der Antrieb ein Elektromotor ist. Der Antrieb, die Übertragungseinrichtung und der Bolzen sind unter unmittelbarerer Weitergabe genetischer Energie bewegungsgekoppelt, wobei die Bolzgeschwindigkeit über eine Steuerung riegelbar ist, und eine Überwachung der Bewegung des mit dem bolzenbewegungsgekoppelten Antriebs ist mit der Steuerung durchführbar, und die Steuerung ist mit mindestens einem Sensor verbunden, für eine Bestimmung der Position des beweglichen Teils relativ zum feststehenden Teil.

Die DE 102 52 025 A1 zeigt ein Schloss mit einem Gehäuse und einem Riegel einer Zuhaltung zum Arretieren des Riegels in einer Schließstellung.

Ferner sind die DE 10 2006 046 437 A1 und die JP 2011-143483 bekannt.

### Darstellung der Erfindung

Es ist daher Aufgabe der vorliegenden Erfindung, störende Geräte und Gegenstände, um eine unfallfreie Begehung der Maschine sicherzustellen. Dies wird zum Beispiel bei einem Werkzeugwechsel oder beim Herausnehmen des Werkstückes benötigt. Des Weiteren soll die Ausfallwahrscheinlichkeit der verbauten Geräte, aufgrund von z.B. Staub und Spänen, minimiert werden.

Dies wird für eine Werkzeugmaschine mit Verriegelungssystem für Schutztüren mit den Merkmalen des Oberbegriffs von Anspruch 1 dadurch erreicht, dass man einen im Maschinenboden versenkbaren Riegel, bevorzugt einen Zylinder, einsetzt, der in eine Verriegelungsaufnahme, eine Öffnung in einem verschließbaren Teil, an der Schutzeinrichtung eingreift. Dabei liegt, bei geöffneter Schutzeinrichtung und in der Entriegelungsposition des Riegels, die Deckelfläche des Riegels in einer Ebene mit dem Maschinenboden oder darunter. Der Maschinenboden weist dadurch eine planare bzw. eine Vertiefung in der planaren Fläche auf, auf der keine Gegenstände oder Teile in den Bearbeitungsraum ragen. Durch diese spezielle Ausführung wird das Verletzungsrisiko für den Bediener stark vermindert, da er bei Betreten der Maschine, zum Beispiel für einen Werkzeugwechsel, nicht mehr Gefahr läuft zu stolpern oder hängen zu bleiben. Zudem können bei Entnahme und Einlage der Werkstücke vor, oder nach einem Bearbeitungszyklus diese nicht mehr anecken, wodurch eine Verringerung des Produktionsausschusses erzielt wird.

Die geringe Ausfallwahrscheinlichkeit wird durch die geringe Anzahl an Bauteilen und deren geschlossener Bauform, für den Riegel, und der offenen Bauform, für das zu verschließende Teil, erreicht. Durch die Vermeidung von Kammern und Hinterschneidungen können sich keine Teile in diesen Bereichen sammeln und eine Fehlfunktion, aufgrund eines Zusetzens, wird vermieden. Hinzu kommt, dass durch ein Versenken des Riegels, dieser durch einen Bediener oder ein Werkstück, beispielsweise durch dagegen stoßen, nicht mehr beschädigt oder verbogen werden kann und dadurch die Lebensdauer steigt und die Ausfallwahrscheinlichkeit sinkt.

Durch den erfindungsgemäßen Aufbau des Verriegelungssystems wird eine CE-konforme Türverriegelung mit PFL-e (Performance Level e nach ISO13849-1) geschaffen.

In einer bevorzugten Ausführungsform wird der Riegel zum Öffnen und zum Schließen der Schutzeinrichtung in einer zur Bodenfläche winkligen Richtung, zum Beispiel entlang der Längsachse des Zylinders, verfahren. Diese Achse erstreckt sich in winkliger Richtung zur Bodenfläche, d.h. nicht parallel zu dieser. Die Hubhöhe des Riegels liegt zwischen der Entriegelungsposition, die dadurch gekennzeichnet ist, dass die Deckelfläche des Riegels in einer Ebene mit dem Maschinenboden (oder darunter) ist, und der Verriegelungsposition, die dadurch gekennzeichnet ist, dass der Riegel in das verschließbare Teil eingreift und die Deckelfläche des Riegels über die Abschlussfläche des verschließbaren Teils bzw. der Öffnung ragt. Durch den Eingriff in die Öffnung wird ein Öffnen der Schutzeinrichtung mechanisch verhindert bzw. blockiert und trägt so zur Produktionsstabilität bei.

Erfindungsgemäß weist die Werkzeugmaschine ein verschließbares Teil auf, welches auf verschiedene Arten ausgeführt werden kann. Gemäß einer ersten Ausführungsform der Erfindung kann das verschließbare Teil so ausgeführt sein, dass es ein umgedrehtes U-Profil darstellt, in dessen offenen Schenkel der Riegel eingreift und nach unten, in Richtung Maschinenboden zeigt. Die zwei seitlichen Schenkel des Profils müssen dabei nicht gleich lang sein, sondern können aufgrund konstruktiver und sicherheitstechnischer Maßnahmen von unterschiedlicher Länge sein. Die Ebenen, in denen die zwei Schenkel liegen, sollten vorzugsweise parallel zueinander sein. So kann beispielsweise bei einer Schwenktür dieses Profil verwendet werden, welches durch die zwei Schenkel, die in diesem Fall senkrecht zur Bewegungsrichtung angeordnet sind, den Riegel sicher in Bewegungsrichtung der Schutzeinrichtung einbettet und dadurch die Schutzeinrichtung mechanisch sperrt.

Gemäß einer zweiten Ausführungsform kann das verschleißbare Teil auch durch ein Bauteil mit entsprechend großem Loch dargestellt werden. Ausgehend von dem U-Profil aus der ersten Ausführungsform wird ein weiterer Schenkel, meist die vierte Seite bei einem Rechteck, in das zu verschließende Teil eingesetzt und befestigt. Dieser Schenkel ist parallel zum Maschinenboden und sitzt zwischen den beiden parallelen Seitenschenkeln. Die Befestigung kann beispielsweise durch Schweißen, Kleben, Bördeln, oder durch einen Formschluss erfolgen. Im neuen Schenkel befindet sich eine Öffnung, bevorzugt eine Bohrung oder Loch, die einen größeren Umfang als den Umfang des Riegels aufweist. So kann beispielsweise bei einer Schiebetür dieses Profil verwendet werden, welches beispielsweise durch die Bohrung den Riegel sicher in Bewegungsrichtung der Schutzeinrichtung einbettet und dadurch die Schutzeinrichtung mechanisch sperrt.

Gemäß der vorliegenden Erfindung weist die Werkzeugmaschine eine Schutzeinrichtung auf. Diese kann als Haube, Tür, Klappe oder als jegliches anderes verschließbares Element ausgeführt sein, welches den Bediener vor Lärm, herausfliegenden Teilen, beispielsweise Späne, Fräser oder Schmierstoffe, und Staub schützt. Entsprechend der Funktionsweise eines Elementes der mittelbaren Sicherheit kann auch von außerhalb des Bearbeitungsraumes, bei geschlossener Schutzeinrichtung, nichts in den Bearbeitungsraum hineingelangen und so den Arbeitsprozess stören.

Gemäß einer Weiterbildung der vorliegenden Erfindung besitzt die Werkzeugmaschine nicht nur eine mechanische Sicherheitseinrichtung, sondern auch über eine elektronische. Die elektronische Überwachung wird durch den wechselseitigen Einsatz von aktiven und passiven Spulen und einer Leistungs- und Auswertelektronik ermöglicht. Dies hat den Vorteil, dass ein Teil, die passive Spule oder Transponder, immer nur als Reflektor fungiert und so die Wartungsarbeiten und Ausfälle auf einem Minimum gehalten werden können.

Erfindungsgemäß ist eine aktive oder passive Spule im Riegel der Werkzeugmaschine angeordnet. Vorzugsweise wird an der Deckelfläche des Riegels ein Raum geschaffen, beispielsweise durch drehen oder fräsen, in dem diese Spule eingesetzt werden kann. Mit einem Befestigungselement, vorzugsweise ein Epoxidharz, wird die Spule dort eingesetzt. Das Epoxidharz hat in diesem Fall den Vorteil, dass die Antennenwirkung bezüglich des störenden Metalls/Umgebung nicht zur Wirkung kommt. Sollte eine aktive Spule, auch als Lesegerät bezeichnet, eingesetzt werden, muss der Riegel zusätzlich mit einem Kanal ausgestattet werden, der die Kabel der Spule zur Leistungs- und Auswertelektronik führen kann. Entsprechend der Spulenausführung kann der Riegel aus einem Vollmaterial oder einer Kolbenstange mit Hohlbohrung bestehen. Durch die Variabilität kann das Verriegelungssystem an verschiedene Werkzeugmaschinen angepasst werden, die bereits eine elektronische Überwachung besitzen.

In der Werkzeugmaschine verfügt nicht nur der Riegel, sondern auch das verschließbare Teil über aktive bzw. passive Spule, die als Gegenstück der Spule im Riegel und damit zur Positionsbestimmung der Schutzeinrichtung dient. Wird am Riegel eine aktive Spule, d.h. ein Lesegerät, verwendet, so wird am schließbaren Teil eine passive Spule, d.h. ein Transponder, verwendet und umgekehrt. Am verschließbaren Teil der Schutzeinrichtung wird die Spule beispielsweise mit einem Adhäsiv oder aber mit einem anderen Befestigungselement befestigt. Während des Betriebs kann die aktive Spule eine Änderung der Position der passiven Spule detektieren. Für den Betrieb der Werkzeugmaschine muss die Verriegelungsposition erreicht werden, dennoch ist zwischen den verwendeten Spulen, bzw. Bauteilen, ein Versatz im Raum innerhalb vorgegebener Toleranzen erlaubt.

Gemäß der vorliegenden Erfindung wird der Riegel des Verriegelungssystems ein- und ausgefahren bzw. in eine Entriegelungsposition und Verriegelungsposition bewegt. Diese Bewegung wird vorzugsweise pneumatische, kann aber auch hydraulisch, elektrisch, magnetisch oder mechanisch ausgeführt werden.

Gemäß der vorliegenden Erfindung werden die beiden Spulen von der Leistungs- und Auswerteinheit überwacht. Diese ist so eingerichtet, dass sie den Betrieb der Maschine erst freigibt, wenn die erste und die zweite Spule sich in einer Position zueinander befinden, in der sichergestellt ist, dass die Schutzeinrichtung auch ordnungsgemäß verschlossen ist. Bei diesem System handelt es sich bevorzugt um ein Sender-Empfänger-System oder RFID-System. Die aktive Spule wird dabei jeweils so programmiert und codiert, so dass eine eindeutige Zuordnung zu einer passiven Spule stattfinden kann. Dabei kann es sich um eine Standard- Codierung oder um eine Spezialcodierung handeln. Sollte eine Spule kaputt gehen, kann bei der Standardcodierung einfach das kaputte Bauteil ersetzt werden, ohne dass eine neue Codierung erfolgen muss. Sind die Spulen allerdings mit einer Spezialcodierung versehen, muss das System, bzw. die zwei Spulen, zusammen ausgetauscht werden. Dies hat den Vorteil, dass einem Unsachgemäßen überbrücken der Sicherheitsanlagen vorgebeugt wird. Zudem können keine Bauteile minderer Qualität eingebaut werden.

### Kurze Beschreibung der Zeichnungen

Weitere Einzelheiten und Vorteile der vorliegenden Erfindung werden anhand der nachfolgenden Beschreibung unter Bezugnahme auf das in den Zeichnungen dargestellte Ausführungsbeispiel näher erläutert. Darin zeigen:
Fig. 1 ist eine Querschnittdarstellung einer Werkzeugmaschine, mit Bearbeitungsraum und Werkzeugmaschinengrundkörper und mit schwenkbarer Schutzeinrichtung.
Fig. 2 ist eine vergrößerte Querschnittdarstellung des Ausschnitts B gemäß der Fig. 1 einer ersten Ausführungsform B'.
Fig. 3 ist eine vergrößerte Querschnittdarstellung des Ausschnitts B gemäß der Fig. 1 einer zweiten Ausführungsform B".

### Ausführliche Beschreibung bevorzugter Ausführungsformen

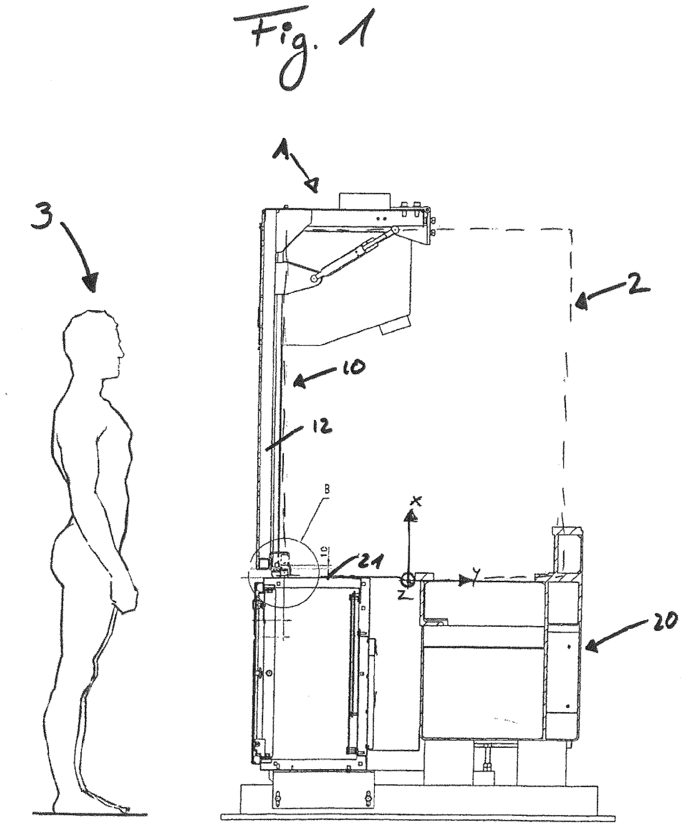

Figur 1 zeigt eine Querschnittdarstellung, gemäß einer Ausführungsform der Erfindung, einer Werkzeugmaschine 1, welche einen Bearbeitungsraum 2, eine Schutzeinrichtung 10 und einen Werkzeugmaschinengrundkörper 20 umfasst.

Zudem ist ein Koordinatensystem definiert, welches seinen Ursprung in der Ebene eines Maschinenbodens 21 der Werkzeugmaschine 1 hat. Dabei liegt die X-Achse orthogonal auf dem Maschinenboden 21 und verläuft nach oben, in Richtung des Bearbeitungsraumes 2. Die Y-Achse liegt in der Ebene des Maschinenbodens 21 und ist orthogonal zur X-Achse und zur Schutzeinrichtung 10. Die Y-Achse verläuft in Richtung des hinteren Teils der Werkzeugmaschine 1, das heißt sie zeigt weg von der Schutzeinrichtung 10. Die Z-Achse liegt orthogonal zur Y- und X-Achse und zeigt aus der Zeichenebene hinaus.

Der Bearbeitungsraum 2 ist der Raum in dem die Werkstücke mithilfe des Werkzeuges der Werkzeugmaschine 1 bearbeitet werden. Dieser Bereich wird vom öffentlichen Bereich 3, in dem sich zum Beispiel die Bediener 3 befinden, durch eine Schutzeinrichtung 10 abgegrenzt. Zum Herausnehmen und Hineinlegen der Werkstücke oder zum Wechseln des Werkzeuges kann die Schutzeinrichtung 10 entfernt bzw. geöffnet werden. Eine Möglichkeit ist in Figur 1 gezeigt und zeigt einen Klappmechanismus, mit dem eine Maschinenklappe 12 nach oben geklappt wird. Dabei ist das Gelenk am oben Ende der Werkzeugmaschine 1 angebracht, so dass die Maschinenklappe 12 um eine Z'-Achse (Rotationsachse im Gelenk und parallel zur Z-Achse) rotieren kann. In einer weiteren Ausführungsform (nicht dargestellt) kann diese Mechanik beispielsweise durch eine Schutzeinrichtung 10 mit verschiebbarer Maschinenklappe 12 ersetzt werden. Die Maschinenklappe 12 ist dann an einer linearen Führung gelagert, die sich an der Oberseite oder Unterseite der Klappe 12 befindet. Die Klappe 12 verfährt beim Öffnen oder Schließen der Schutzeinrichtung 10 parallel zur Z-Achse.

An der Maschinenklappe 12 ist gemäß der Erfindung ein verschließbares Teil 13 angebracht. Dieses Teil ist im Vergrößerungsbereich B schematisch dargestellt und wird in den nachfolgenden Darstellungen näher erläutert. Das verschließbare Teil 13 kann in verschiedenen Ausführungsformen ausgeführt werden, die im Folgenden näher beschrieben werden.

Der Werkzeugmaschinengrundkörper 20 umfasst unter anderem den Maschinenboden 21 und einen schematisch dargestellten Riegel 22. Die verschiedenen Ausführungsformen und eine genaue Darstellung ist zwecks Übersichtlichkeit auch hier in den nachfolgenden Darstellungen und Ausführungsformen ausgeführt.

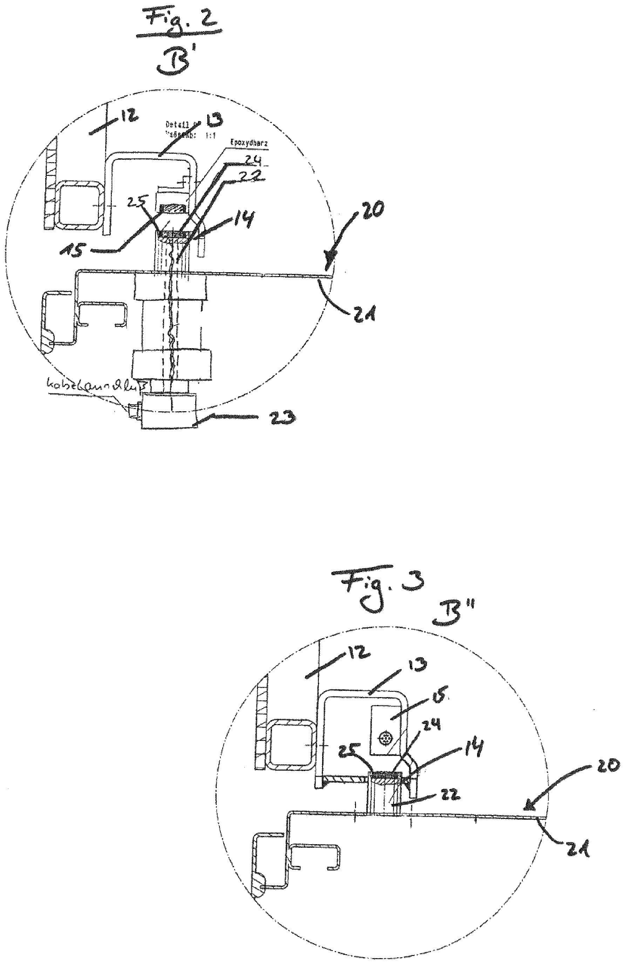

Die Längsschnittdarstellung des Vergrößerungsbereichs B in Figur 2 zeigt eine erste Ausführungsform B' der Erfindung. Im oberen Teil der Vergrößerung befindet sich die Schutzeinrichtung 10 mit der Maschinenklappe 12. An der Maschinenklappe befindet sich das verschließbare Teil 13 in der ersten Ausführungsform. Dieses verschließbare Teil 13 ist in diesem Fall ein gewinkeltes Blech, welches über mindestens zwei Biegungen mit 90° Winkel verfügt, so dass zwei gegenüberliegende Seiten parallel sind. Eine dieser Seiten, oder Schenkel, wird an der Maschinenklappe 12 mit mindestens einem Befestigungselement fixiert. Das gewinkelte Blech schließt gemäß der ersten Ausführungsform nach den zwei parallelen Seiten, nach unten in negativer X- Richtung ab. So entsteht ein offenes Profil bzw. eine Öffnung 14. Alternativ zu einem gewinkelten Blech kann zum Beispiel auch ein Vierkantrohr, beispielsweise aus Aluminium, verwendet werden, welches an einer Seite aufgeschnitten wird oder welches so montiert wird, dass eine Öffnung 14 in negativer X-Richtung vorhanden ist.

Das verschließbare Teil beinhaltet nach einer ersten Ausführungsform der Erfindung eine passive Spule bzw. Sensor 15. Dieser wird über ein Befestigungselement oder ein Adhäsiv am verschließbaren Teil befestigt.

Der Maschinenboden 21 des Werkzeugmaschinengrundkörpers 20 umfasst weiterhin den Riegel 22. Dieser kann gemäß der Erfindung bodentief versenkt werden, das heißt, dass die Deckelfläche 25 des Riegels 22 in einer Ebene mit dem Maschinenboden 21 liegt und diese nicht überragt. Der Riegel 22 kann aus einem Vollmaterial oder zum Beispiel einer Kolbenstange mit Hohlbohrung bestehen. Gemäß der ersten Ausführungsform der Erfindung wird in diesen Riegel 22 eine aktive Spule bzw. Sensor 24 in der Deckelfläche 25 eingelassen. Dazu wird in den Riegel 22 eine Vertiefung oder Stufe gefräst, gebohrt, gedreht, oder bei additiven Verfahren konstruiert, in die die Spule 24 eingesetzt wird. Die Spule 24 schließt mit der Deckelfläche 25 des Riegels 22 ab und bildet so eine Einheit mit dem Riegel 22. Die aktive Spule umfasst zudem noch Kabel, welche im Riegel 22 zu einer Leistungs- und Auswertelektronik 23 geführt werden. Dort werden die Signale verarbeitet und weitergegeben.

Der Riegel wird mit einer Einheit unterhalb des Maschinenbodens in X-Richtung verfahren. Diese Funktion kann ein mechanisches, pneumatisches, elektrisches, magnetisches oder hydraulisches System ausführen.

Die Positionierung von verschließbaren Teil 13 und Riegel 22 muss in der Genauigkeit erfolgen, so dass die Spulen bzw. Sensoren in einer Achse parallel zueinander liegen. Ein gewisser Versatz im Raum innerhalb einer vorgegebenen Toleranz ist zwar erlaubt, sollte aber auf ein Minimum begrenzt werden. Zudem muss der Riegel 22 so positioniert sein, dass er in der Verriegelungsposition in die Öffnung 14, des verschließbaren Teils 13 eingreift.

Figur 3 zeigt eine Querschnittdarstellung des Vergrößerungsbereichs B in einer zweiten Ausführungsform B". Diese Ausführungsform unterscheidet sich im Wesentlichen dadurch, dass eine aktive Spule 15 nun im verschließbaren Teil 13 und eine passive Spule 24 in der Vertiefung des Riegels 22 sitzt. Zudem besitzt der verschließbare Teil 13 eine weitere Seite bzw. Schenkel, die zwischen den zwei parallelen Seiten des verschließbaren Teils 13 eingesetzt wird. Die Befestigung kann durch Schweißen, Kleben, Bördeln, oder durch einen Formschluss erfolgen. Dieser neue Schenkel weißt eine Öffnung 14 auf, in der der Riegel 22 eingreift und die einen größeren Umfang als den Umfang des Riegels aufweist. Die Öffnung kann durch Bohren, Fräsen oder ähnlichen hergestellt werden. Sollte das verschließbare Teil 13 beispielsweise durch ein Vierkantrohr realisiert werden, wird in eine entsprechende Seite, die parallel zum Maschinenboden 21 ist, eine Öffnung 14 geschaffen.

### Bezugszeichenliste

- 1: Werkzeugmaschine
- 2: Bearbeitungsraum
- 3: Bediener / öffentlicher Bereich
- 10: Schutzeinrichtung
- 12: Maschinenklappe
- 13: verschließbares Teil
- 14: Öffnung
- 15: Spule
- 20: Werkzeugmaschinengrundkörper
- 21: Maschinenboden
- 22: Riegel
- 23: Leistungs- und Auswertelektronik
- 24: Spule
- 25: Deckelfläche des Riegels
- B: Vergößerungsbereich
- B`: Vergrößerungsbereich der ersten Ausführungsform
- B": Vergrößerungsbereich der zweiten Ausführungsform

## Patentansprüche

1. Werkzeugmaschine (1) zur Bearbeitung von bevorzugt plattenförmigen Werkstücken, die bevorzugt zumindest abschnittsweise aus Holz, Holzwerkstoffen oder Kunststoffen bestehen, mit:
einem Bearbeitungsraum (2), der nach unten in Richtung Boden durch einen Maschinenboden (21) und in Richtung des Bedieners (3) durch eine Schutzeinrichtung (10) begrenzt ist,
einem Riegel (22), bevorzugt ein Zylinder, mit einer Deckelfläche (25),
einem verschließbaren Teil (13), welches an der Schutzeinrichtung (10) fixiert ist,
einem Verriegelungssystem der Schutzeinrichtung (10), welches den verschließbaren Teil (13) und den Riegel (22) beinhaltet,
einer Leistungs- und Auswerteinheit (23), welche eingerichtet ist, um die Signale einer ersten und einer zweiten Spule (15, 24) auszulesen und zu verarbeiten,
wobei die Deckelfläche (25) des Riegels (22) bei geöffneter Schutzeinrichtung (10) mit dem Maschinenboden (21) in einer Ebene oder darunter liegt,
**dadurch gekennzeichnet, dass** die erste Spule (15) am verschließbaren Teil (13) und die zweite Spule im Riegel (22) angeordnet ist.

2. Werkzeugmaschine (1) nach Anspruch 1, wobei der Riegel (22) in einer zu einer Bodenfläche winkligen Richtung, zwischen einer Verriegelungsposition und einer Entriegelungsposition verfahrbar ist.

3. Werkzeugmaschine (1) nach einem der vorherigen Ansprüche, wobei der Riegel (22) in einer Entriegelungsposition aus dem verschließbaren Teil (13) gezogen ist und in einer Verriegelungsposition in das verschließbare Teil (13) hineinragt.

4. Werkzeugmaschine (1) nach einem der vorherigen Ansprüche, wobei die Schutzeinrichtung (10) eine Haube, Schutztüre, Klappe, oder ein anderes bewegliches Element darstellt.

5. Werkzeugmaschine (1) nach einem der vorherigen Ansprüche, wobei die erste Spule (15) eine passive oder aktive Spule ist.

6. Werkzeugmaschine (1) nach einem der vorherigen Ansprüche, wobei die zweite Spule (24) eine aktive oder passive Spule ist.

7. Werkzeugmaschine (1) nach einem der vorherigen Ansprüche, wobei der Riegel (22) an der Deckfläche (25) eine Stufe aufweist, in der die zweite Spule (24) eingesetzt und fixiert wird.

8. Werkzeugmaschine (1) nach einem der vorherigen Ansprüche, wobei die erste Spule (15) durch ein Adhäsiv oder ein Befestigungselement fixiert ist.

9. Werkzeugmaschine (1) nach einem der vorherigen Ansprüche, wobei der Riegel (22) eine durchgehende Kolbenstange und Hohlbohrung aufweist oder aus einem Vollmaterial besteht.

10. Werkzeugmaschine (1) nach einem der vorherigen Ansprüche, wobei der Riegel (22) durch ein pneumatisches, mechanisches, hydraulisches, elektrisches oder magnetisches System ein- und ausgefahren wird.

11. Werkzeugmaschine (1) nach einem der vorherigen Ansprüche, wobei die Leistungs- und Auswerteinheit (23) derart eingerichtet ist, dass die Werkzeugmaschine (1) nur in Betrieb genommen werden kann, wenn die beiden Spulen in einer vorbestimmten Position zueinander sind, in der sichergestellt ist, dass die Schutzeinrichtung ordnungsgemäß verschlossen ist.

12. Werkzeugmaschine (1) nach einem der vorherigen Ansprüche, wobei die Leistungs- und Auswerteinheit (23) derart eingerichtet ist, dass die Werkzeugmaschine (1) nur in Betrieb genommen werden kann, wenn eine Codierung der ersten und zweiten Spule (15, 24) übereinstimmt.

## Claims

1. Machine tool (1) for machining preferably planar workpieces that are preferably composed at least in part of wood, wood materials or plastics materials, said machine tool comprising:
a machining space (2), which is delimited towards the floor by a machine base (21) and towards the user (3) by a protective device (10),
a locking bar (22), preferably a cylinder, having a cap surface (25),
a closable portion (13), which is secured to the protective device (10),
a locking system of the protective device (10), which consists of the closable portion (13) and the locking bar (22),
a power and analysis unit (23), which is configured to read out and process the signals of a first and a second coil (15, 24),
the cap surface (25) of the locking bar (22) lying in a plane with the machine base (21) or thereunder when the protective device (10) is open,
**characterised in that** the first coil (15) is arranged on the closable portion (13) and the second coil is arranged in the locking bar (22).

2. Machine tool (1) according to claim 1, wherein the locking bar (22) can be moved between a locked position and an unlocked position in a direction that is angled with respect to a floor surface.

3. Machine tool (1) according to any of the preceding claims, wherein the locking bar (22) is pulled out of the closable portion (13) in an unlocked position and protrudes into the closable portion (13) in a locked position.

4. Machine tool (1) according to any of the preceding claims, wherein the protective device (10) is a hood, protective door, flap, or other movable element.

5. Machine tool (1) according to any of the preceding claims, wherein the first coil (15) is a passive or active coil.

6. Machine tool (1) according to any of the preceding claims, wherein the second coil (24) is an active or passive coil.

7. Machine tool (1) according to any of the preceding claims, wherein the locking bar (22) comprises a step on the cap surface (25) in which the second coil (24) is inserted and secured.

8. Machine tool (1) according to any of the preceding claims, wherein the first coil (15) is secured by means of an adhesive or a fastening element.

9. Machine tool (1) according to any of the preceding claims, wherein the locking bar (22) comprises an end-to-end piston rod and hollow bore or consists of a solid material.

10. Machine tool (1) according to any of the preceding claims, wherein the locking bolt (22) is moved in and out by means of a pneumatic, mechanical, hydraulic, electric or magnetic system.

11. Machine tool (1) according to any of the preceding claims, wherein the power and analysis unit (23) is configured such that the machine tool (1) can only be put into operation if the two coils are in a predetermined position relative to one another, in which position it is ensured that the protective device is properly closed.

12. Machine tool (1) according to any of the preceding claims, wherein the power and analysis unit (23) is configured such that the machine tool (1) can only be put into operation if a coding of the first and second coil (15, 24) matches.

## Revendications

1. Machine-outil (1) pour l'usinage de pièces à travailler de préférence en forme de plaques, qui sont constituées de préférence au moins en partie de bois, de matériaux dérivés du bois ou de matières plastiques, avec :
une chambre d'usinage (2), qui est délimitée vers le bas en direction du sol par un fond de machine (21) et en direction de l'utilisateur (3) par un dispositif de protection (10),
un verrou (22), de préférence un cylindre, avec une surface de recouvrement (25),
une partie (13) pouvant être fermée, laquelle est fixée au dispositif de protection (10),
un système de verrouillage du dispositif de protection (10), lequel inclut la partie (13) pouvant être fermée et le verrou (22),
une unité de puissance et d'évaluation (23), laquelle est conçue pour lire et traiter les signaux d'une première et d'une deuxième bobine (15, 24),
dans laquelle la surface de recouvrement (25) du verrou (22), lorsque le dispositif de protection (10) est ouvert, se situe dans un plan avec le fond de machine (21) ou sous celui-ci,
**caractérisée en ce que** la première bobine (15) est disposée sur la partie (13) pouvant être fermée et la deuxième bobine dans le verrou (22).

2. Machine-outil (1) selon la revendication 1, dans laquelle le verrou (22) est déplaçable entre une position de verrouillage et une position de déverrouillage, dans une direction angulaire par rapport à une surface de fond.

3. Machine-outil (1) selon l'une quelconque des revendications précédentes, dans laquelle le verrou (22), dans une position de déverrouillage, est tiré de la partie (13) pouvant être fermée, et, dans une position de verrouillage, fait saillie dans la partie (13) pouvant être fermée.

4. Machine-outil (1) selon l'une quelconque des revendications précédentes, dans laquelle le dispositif de protection (10) représente un capot, une porte de protection, un clapet, ou un autre élément mobile.

5. Machine-outil (1) selon l'une quelconque des revendications précédentes, dans laquelle la première bobine (15) est une bobine passive ou active.

6. Machine-outil (1) selon l'une quelconque des revendications précédentes, dans laquelle la deuxième bobine (24) est une bobine active ou passive.

7. Machine-outil (1) selon l'une quelconque des revendications précédentes, dans laquelle le verrou (22) présente sur la surface de recouvrement (25) un étage dans lequel la deuxième bobine (24) est insérée et fixée.

8. Machine-outil (1) selon l'une quelconque des revendications précédentes, dans laquelle la première bobine (15) est fixée par un adhésif ou un élément de fixation.

9. Machine-outil (1) selon l'une quelconque des revendications précédentes, dans laquelle le verrou (22) présente une tige de piston continue et un alésage creux ou est constitué d'un matériau massif.

10. Machine-outil (1) selon l'une quelconque des revendications précédentes, dans laquelle le verrou (22) est rentré et sorti par un système pneumatique, mécanique, hydraulique, électrique ou magnétique.

11. Machine-outil (1) selon l'une quelconque des revendications précédentes, dans laquelle l'unité de puissance et d'évaluation (23) est conçue de sorte que la machine-outil (1) ne peut être mise en service que lorsque les deux bobines se trouvent dans une position prédéfinie l'une par rapport à l'autre, dans laquelle il est garanti que le dispositif de protection est fermé correctement.

12. Machine-outil (1) selon l'une quelconque des revendications précédentes, dans laquelle l'unité de puissance et d'évaluation (23) est conçue de sorte que la machine-outil (1) ne peut être mise en service que lorsqu'un codage de la première et deuxième bobine (15, 24) concorde.
